(19) Europäisches Patentamt
European Patent Office
Office européen des brevets

(11) **EP 2 110 998 A1**

(12) **EUROPEAN PATENT APPLICATION**

(43) Date of publication:
**21.10.2009 Bulletin 2009/43**

(51) Int Cl.:
**H04L 12/56** (2006.01)

(21) Application number: **08103569.3**

(22) Date of filing: **16.04.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Nokia Siemens Networks Oy**<br>**02610 Espoo (FI)** | (72) Inventors:<br>• **Görg, Carmelita**<br>  **28357, Bremen (DE)**<br>• **Pangboonyanon, Varaporn**<br>  **28195, Bremen (DE)**<br>• **Pittmann, Frank**<br>  **12099, Berlin (DE)**<br>• **Udugama, Asanga**<br>  **28357, Bremen (DE)** |

(54) **Method for intermediate flow management enabled nodes to cope with IPv6 fragment packet filtering**

(57) The invention concerns a method, a computer program product and a network entity (ePDN GW / HA, Fig. 4) for handling fragment packets, which fragment packets (FP, Figs. 3a, 3b, 8) respectively comprise parts of a data packet of a data stream ("first flow" or "second flow" in Fig. 4), which data packet comprises data packet header information ("UDP header", Fig. 3a, 3b) and which data packet is longer than a maximum allowed data packet length defined by a protocol used to transmit the fragment packets,
wherein the network entity comprises:
-a buffering unit (BU) for temporarily buffering fragment packets arriving at the network entity,
-a reassembling unit (RU)
--for reassembling data packet header information ("UDP header", Fig. 3a) from one fragment packet (FP#1. Fig. 3a),
if the complete data packet header information is in this one fragment packet (FP#1),
--for reassembling the data packet header information ("UDP header", Fig. 3b) from a plurality of fragment packets (FP#1, FP#2, Fig. 3b),
if the data packet header information is distributed over a plurality of fragment packets
(FP#1, FP#2, Fig. 3b),

-an interface to a fragment packet filtering unit (EPDN / GW or GW (HR) or GW (FR) in Figs 4, 8) for filtering fragment packets depending on reassembled data packet header information.

Figure 5: Main flow diagram for proposed mechanism

**Description**

**Technical field of the invention**

The invention relates to a network entity, a method and a computer program product for handling fragment packets.

**Background of the invention**

Flow management is a mechanism for users or network operations to distribute or shape traffic flows among multiple network attachments. In order to distribute flows, the attachment has to be associated with the traffic flows that allow the recipient to identify and route it to a given address of the corresponding network attachment. Flow management may be seen as one potential application using the proposed solution; others may be possible if they also rely on information as described below. This invention focuses on flow management as application of the proposed solution.

Identifying a flow on network layer has some flexibility depending on how a specific user wants to represent the flow. Basically traffic flows are defined as an individual, unidirectional data or packet stream between two applications, which is uniquely identified by the 5-tuple (Source IP address, Source Port number, Destination IP Address, Destination Port number, and the Transport Protocol). Source and destination IP addresses are located in the IPv6 header. Source and destination port numbers are located in the transport header. In IPv6 the transport protocol can be identified from the Next Header field in the previous header.

The technical problem arises from the fact that packets are fragmented when an IPv6 source sends a packet larger than would fit in the path Maximum Transmission Unit (MTU) to its destination. MTU specifies the maximum packet size datagram that can be transmitted over the network without fragmentation of the packets [RFC 791]. MTU depends on the underlying network technology (or link layer technology), which means that it is for Ethernet 1500 octets, for Point-to-Point over Ethernet (PPPoE) (e.g., DSL) less than 1492 octets or for Asynchronous Transfer Mode (ATM) 4500 octets. Note that unlike IPv4, fragmentation in IPv6 is performed only by source nodes, not by routers along a packet's delivery path. Also in IP re-assembly of the fragmented packets is done in the destination host, not in the routers along the packet's delivery path.

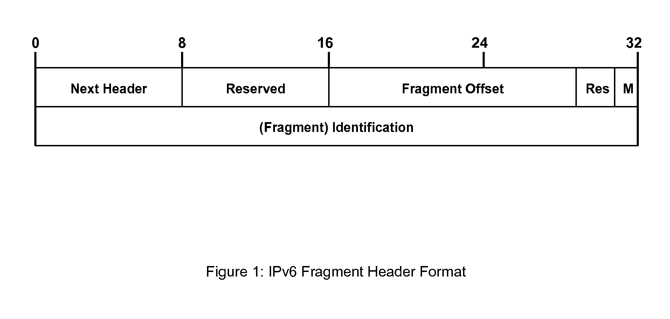

In IPv6 RCF 2460 [1], the Fragment Header (FH) is used in fragment packets. Figure 1 depicts the Fragment Header in IPv6. The proposed solution is specified in this invention; however this example for implementing the invention focuses on IPv6.

In Figure 1 the following terms are used:

Next Header: An 8-bit selector. Identifies the initial header type of the fragmentable part of the original packet (defined below). Uses the same values as the IPv4 Protocol field [RFC-1700 et seq.].

Reserved: An 8-bit reserved field. Initialized to zero for transmission; ignored on reception.

Fragment Offset: A 13-bit unsigned integer. The offset, in 8-octet units, of the data following this header, relative to the start of the fragmentable part of the original packet.

Res: A 2-bit reserved field. Initialized to zero for transmission; ignored on reception.

M flag: 1 = more fragments; 0 = last fragment.

(Fragment) Identification:

It comprises 32 bits. It contains a specific value that is common to each of the fragments belonging to a particular message, to ensure that pieces from different fragmented messages are not mixed together.

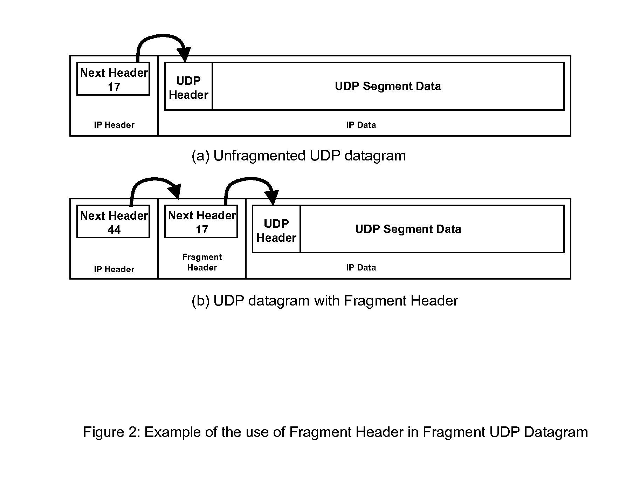

Figure 2 depicts an example of a UDP datagram (Figure 2 (a)), which is too large to fit in the MTU of the path to its destination (Figure 2 (b)). According to standard IP Next Header "17" points to an UDP header, whereas Next Header "44" points to a Fragment Header.

The fragment packet in Figure 2 consists of two parts, i.e., an unfragmentable part and a fragmentable part:

• Unfragmentable part: This includes the IPv6 header plus any extension headers that must be processed by nodes en route to the destination, that is, all headers up to and including the Routing Header if present, else the Hop-by-Hop Options header if present, else no extension headers.

- Fragmentable part: This includes the rest of the packet, that is, any extension headers that need to be processed only by the final destination node(s), plus the upper-layer header and data.

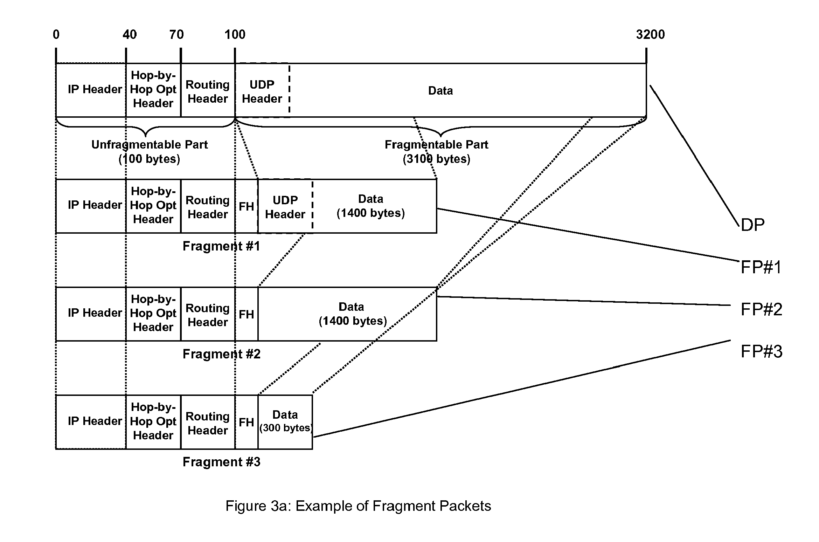

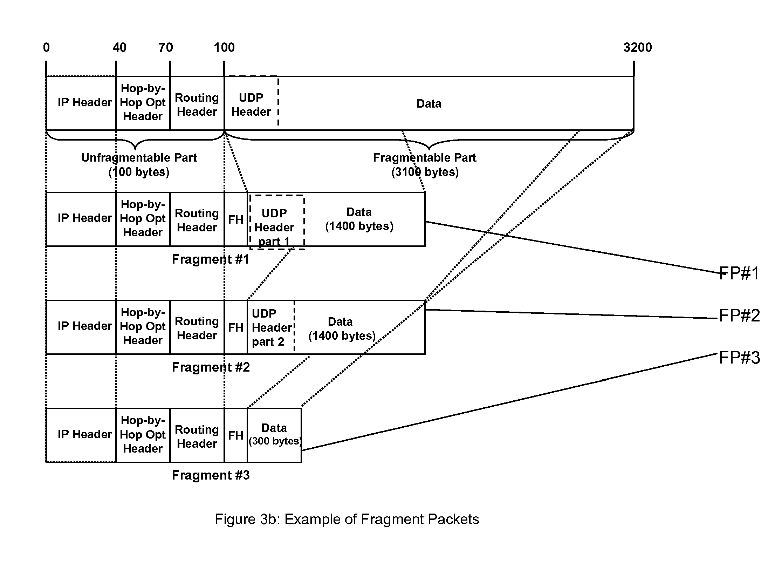

The fragmentable part of the original packet is divided into fragments, each, except possibly the last ("rightmost") one, being an integer multiple of 8 octets long. The fragments are transmitted in separate "fragment packets" as illustrated in Figure 3.

Figure 3a assumes that the transport header (i.e., the UDP header) is completely part of fragment packet no. 1, which has not necessarily been the case. At a dedicated network entity like a Home Agent in the delivery path it may also be possible that the received UDP header can be split and that it is not starting with the first fragment packet (as shown in figure 3b, in which the received UDP header is split in two fragment packets FP#1 FP#2).

Coming back to flow management it may be necessary for intermediate flow management enabled nodes to identify flows by means of information in the transport header along the packet's delivery path (e.g., in the Home Agent (HA) according to [2] or any other Mobility Anchor Point (MAP) for Mobile IPv6). In today's realizations it may now be possible, as outlined above, that the necessary information is not present in fragment packets, hence, it will not be possible to determine the flows by network entities like the HA along the path of the packets. Basically, the technical problem is that the transport header is a part of data, which is the fragmentable part. The contents in the transport header, therefore, are not included in every fragment packet (see Figure 3). Consequently, flows that have to be identified including e.g. either source or destination port numbers are not possible to manage in case of fragmentation. The fragment packets, therefore, cannot be routed to a specified address of the corresponding network attachment, as it is required for flow management actions.

As an example for flow identification, assume the use of an H323 video stream, which is using UDP protocol and pre-configured ports (such as 5001 for audio and 5002 for video). Apart from the contents of the IP header, the transport header must also be taken into consideration to distinguish streams of other applications. If now the transport header containing some of these parameters is not present in each fragment packet, flow management related actions (e.g., in the HA) can not be performed at all, meaning that the audio and video streams cannot be routed (separately) to the specified addresses of the corresponding network attachments.

As far as known, no solutions are discussed in e.g. IETF Monami6 WG and specified so far addressing the problem area, as described here.

There are some researches of fragment packet filtering but in the area of security documents [3] [4] in the enclosed list of references are addressing other aspects.

Considering the **disadvantages** when intermediate flow management enabled nodes (network entities) can not cope with Fragment Packets all is already said in chapter 2: Flows cannot be managed in case of fragmentation when these flows have to be identified within the mentioned nodes including information from transport header. The fragment packets, therefore, cannot be routed to a specified address of the corresponding network attachment. Hence, flow management can not be performed.

**Summary of the invention**

Therefore, it is an object of the present invention to overcome these shortcomings of the prior art.

This is accomplished by what is set forth in the appended independent claims, while the appended dependent claims define advantageous modifications thereof.

Specifically, according to a first aspect of the present invention, there is provided a network entity for handling fragment packets, which fragment packets respectively comprise parts of a data packet of a data stream, which data packet comprises data packet header information and which data packet is longer than a maximum allowed data packet length defined by a protocol used to transmit the fragment packets, wherein the network entity comprises:

a buffering unit for temporarily buffering fragment packets arriving at the network entity,
a reassembling unit for reassembling data packet header information from one fragment packet, if the complete data packet header information is in this one fragment packet,
and for reassembling the data packet header information from a plurality of fragment packets, if the data packet header information is distributed over a plurality of fragment packets.

Modifications of the first aspect of the present invention may include the following.
The network entity may comprise a fragment packet filtering unit or an interface to a fragment packet filtering unit for filtering fragment packets depending on reassembled data packet header information.

The networks entity may further be such that that the fragment packet filtering unit is a fragment packet filtering unit for delivering fragment packets with equal header information to a specific destination.

The network entity may further comprise a fragment list store for storing fragment information sets, with a tracking unit for tracking any arriving fragment packet that has different fragment information from all other fragment packets for which a fragment information set is stored in the fragment list in the fragment list store, and for storing store for storing a fragment information set for this fragment packet.

In a network entity a fragment information set may comprise source address, destination address and ID of the fragment packets of a data packet, wherein header information is reassembled only from fragment packets that have the same source address, destination address, and fragment identification.

The network entity may further comprise a expiry timer starting unit for starting an expiry timer, if the tracking unit tracks an arriving fragment packet that has different source address, destination address and ID from all other fragment packets for which a fragment information set is stored in the fragment list in the fragment list store, with an expiry timer for wherein if a fragment packet arrives and the timer is expired, the entry in the fragment list (FL) is deleted, and all fragment packet(s) for the particular source address, destination address and Fragment ID in the buffer are deleted, and preferably in addition flow management filter(s) for these fragment packets, if available, are removed.

In the network entity the buffering unit may buffer a plurality of fragment packets until the complete header information can be reassembled from the buffered plurality of fragment packets, or, if available, until a timer is timed out.

In the network entity fragment packets may be fragmented from a data packet by a source node, especially an IPv6 source node.

The fragment packets may be transmitted by internet protocol, preferably by Mobile IPv6.

The network entity may further comprise that a fragment list storing unit for entering a flow identification flag (Flow ID Flag) concerning all fragment packets of a data packet into a fragment list memory.

The network entity may further comprise that a time setting unit for setting a time stamp when the first fragment packet of a data packet arrives, and wherein the network entity comprises a timer checking unit for deleting all stored fragment packets of a data packet when noticing that a timer set for the fragment packets is expired.

The header information is e.g. the transport header information of the data packet.

In the network entity the header information may comprise a port number of a data stream, by which port number the fragment packets of this data stream can be separated from fragment packets of a further data stream.

The networks entity may further be a Home Agent or any other Mobility Anchor Point for Mobile IPv6.

According to a second aspect of the present invention, there is provided a method for handling fragment packets arriving at a network entity, which fragment packets respectively comprise parts of a data packet of a data stream , which data packet comprises data packet header information and which data packet is longer than a maximum allowed data packet length defined by a protocol used to transmit the fragment packets, the method comprising at least temporarily buffering fragment packets arriving at the network entity, reassembling data packet header information (e.g. port number) from only one fragment packet, if the complete data packet header information is in this one fragment packet, reassembling the data packet header information from a plurality of fragment packets if the data packet header information is distributed over a plurality of fragment packets, filtering fragment packets depending on data packet header information. Modifications of the second aspect of the present invention may be corresponding to those of the first aspect of the invention.

According to a third aspect of the present invention, there is provided a computer program product comprising code means adapted to produce the steps of any one of the method claims when loaded into the memory of a computer.

The invention can e.g. be a method for intermediate flow management enabled nodes to cope with IPv6 fragment packet filtering. It can partially reassemble fragment packets in dedicated network entities like the HA in the delivery path until it can identify the relevant information in the transport header (e.g. the port numbers). Then, the fragment packet filtering to deliver the packets to a specific destination can be set accordingly. The invention can e.g. support the following:

- Extended functionality in dedicated flow management enabled network entities (NEs) like a Home Agent or more general like Mobility Anchor Points, e.g.

    ○ Maintaining the proposed Fragment List (FL)

    ○ Temporary buffering of received fragment packets in these dedicated NEs organized according to some information maintained in FL

- New method executed in these dedicated NEs to partially reassemble fragment packets

- New, so-called Fragment List (FL) maintained in these dedicated NEs

Other aspects, features and advantages of the present invention will become more fully apparent from the following detailed description of preferred embodiments thereof which is to be taken in conjunction with the appended drawings, in which:

Figure 1 depicts a Fragment Header in IPv6.

Figure 2 depicts an example of a UDP datagram, which is too large to fit in the MTU of the path to its destination so that it is fragmented.

Figures 3 a, b respectively depict a detailed example of three Fragment Packets for a UDP datagram that is too large to fit in the MTU.

Figure 4 depicts a proposed mechanism applied in a 3GPP environment as currently discussed in 3GPP.

Figure 5 depicts a main flow diagram for a proposed method.

Figure 6 depicts an expiry timer flow diagram.

Figure 7 depicts attributes of the proposed Fragment List.

Figure 8 schematically depicts examples for elements of the invention.

This invention can be used as a method for intermediate flow management enabled nodes to cope with e.g. IPv6 fragment packet filtering. It partially reassembles fragment packets in dedicated network entities like the Home Agent or other Mobility Anchor Points in the delivery path until it can identify the relevant information in the transport header (e.g., the port numbers). Then, the fragment packet filtering to deliver the packets to a specific destination can be set accordingly. Possible flow management protocols may be protocols as discussed in IETF WG Monami6 [2] or in the future specified in a new IETF WG MEXT. These protocols use multiple parallel bindings that are basically a prerequisite for flow management actions. The finally chosen flow management protocol is not in the scope of this invention. Any flow management protocol relies on (complete) information from the transport header.

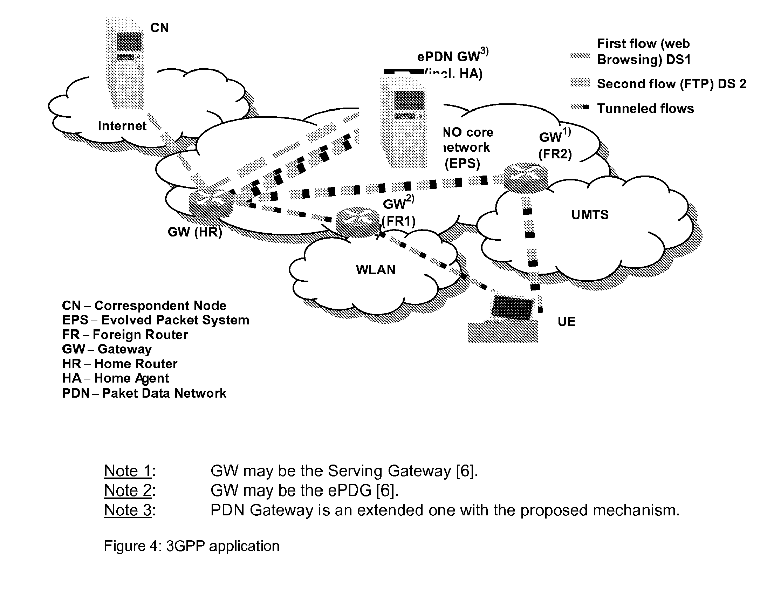

However, the finally chosen flow management protocol needs to cope with the described problem space (as outlined in the chapters 1 and 2). To be able to use or process network and/or transport layer protocol header information the concerned dedicated network entity (as e.g. the currently specified PDN Gateway (incl. HA functionality) [6] in Figure 4 when considering 3GPP systems) as that PDN Gateway has to partially reassemble fragment packets in the delivery path until it can identify the relevant information in the transport header (e.g., the port numbers). Then, the fragment packet filtering to deliver the packets to a specific destination can be set accordingly. Without the proposed mechanism the PDN Gateway is not able to recognize and to process the necessary information in transport layer protocol header.

If the proposed functionality in the PDN Gateway recognizes that the necessary information is distributed over one or more Fragment Packets, the Fragment Packets are queued and buffered until a sufficient number of Fragment Packets are received to be partially reassembled to the complete transport header.

Figure 4 depicts the proposed mechanism applied in a 3GPP environment as currently discussed in [5] [6]. (3GPP is a standard for cellular mobile communication described in detail in e.g. www.3gpp.org, which is herewith incorporated by reference as well as the references in the enclosed reference list.) This use case description may use a flow management mechanism as discussed in IETF WG Monami6 [2] as one possible protocol, but again, the finally chosen flow management mechanism is not in the scope of this invention.

In a potential use case a user e.g. sets up a web browsing session while moving in a train. Due to the fact that he his traveling he decides to attach to the UMTS network. While browsing he is asked to download a new film trailer. But he waits until reaching a train station to attach to a WLAN hot spot using the higher bandwidth to start an FTP download of his new film trailer. Mobility management between 3GPP and non-3GPP access networks is done with MIP (one potential candidate in [5] [6]), while using the proposed mechanism for fragment packet processing at the PDN Gateway (incl. HA [6]) in the MNO's (MNO = mobile network operator) core network (i.e., EPS [6]). While stationary in the train station the user equipment UE has multiple simultaneous bindings with the home agent HA, one in his home network UMTS and the other, temporary one in the WLAN network (e.g. of an independent hot-spot service provider). Since the download has not finalized as the train is leaving the station, the download data flow is re-directed to the UMTS network.

The above depicted extended PDN Gateway (ePDN Gateway) includes a function performing the proposed mechanism for handling IPv6 fragment packet filtering applicable in flow management.

Mobile IPv6 (MIPv6) is used as an example to explain the proposed mechanism since the potential application flow management based on Monami6 mechanisms is specified as MIPv6 extension. As specified in Monami6 flow management actions can be performed at the Correspondent Node (in the case of MIPv6), Home Agent (HA) or Mobility Anchor Point (in the case of Hierarchical MIPv6). In this invention the HA is used as illustrative example that is an anchor point to aggregate and distribute packets to a particular destination address. Hence, the proposed mechanism is installed at the HA. When fragment packets arrived at the HA,

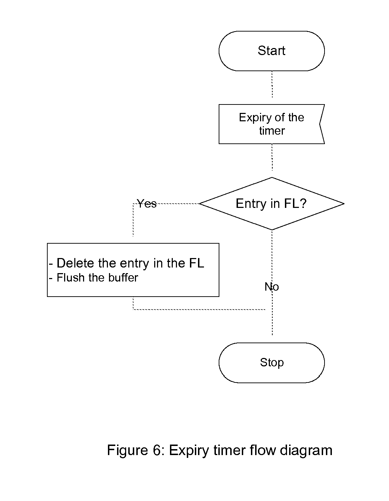

1. The HA keeps a track of the first fragment packet that has different source address, destination address and ID from other fragment packets in the Fragment List (FL) and starts an expiry timer (detailed in Figure 6).
**Note:** An original packet is reassembled only from fragment packets that have the same Source Address, Destination Address, and Fragment Identification.
**Note:** A fragment packet is identified by FH in received IP packets (see Figure 1) .

2. For every fragment packets arriving at the HA,

○ It computes the accumulative fragment packet length (Received Length)
○ Then it checks the M Flag in FH whether it is set

■ If M Flag = 1 (set), compute and add the Total Length value in the FL.

■ If M Flag = 0 (not set), continue

○ Then it checks the FIDF in the FL whether it is set

■ If the Filter Flag = Y, release the packet. Then the Received Length and the Total Length are compared. If they are equal, the fragment packets of the specific packet have been completely received. The entry of this specific packet can be removed from the FL.
■ If the Filter Flag = N, queue it in the buffer and partially re-assemble fragment packets in the buffer. When the transport header is completely represented, FIDF is set (FIDF = Y), the user of the here proposed mechanism performs its actions, e.g. in case of flow management it sets flow management filter(s) for that particular source address, destination address and Fragment ID of the fragment packets in a dedicated network entity like the HA.

3. The relevant network entity as e.g. the HA keeps checking the Time Stamp for each entry in the FL (Expiry Timer).

- If the Time Stamp + 1 (i.e., 60 sec) > current time, delete the entry in FL, delete all fragment packet(s) for the particular source address, destination address and Fragment ID in the buffer. Related to application processing an application like flow management has to remove its filter(s), if available, accordingly.
- If the Time Stamp + 1 (i.e., 60 sec) ≤ current time, do nothing. **Note:** The lifetime of each entry in FL, i.e., each packet, is 60 sec based on section 4.5 in RFC 2460 [1]. It explains that the packet must be abandoned and all the fragment packets must be discarded if insufficient fragments are received to complete reassembly of a packet within 60 seconds of the reception of the first-arriving fragment of that packet.

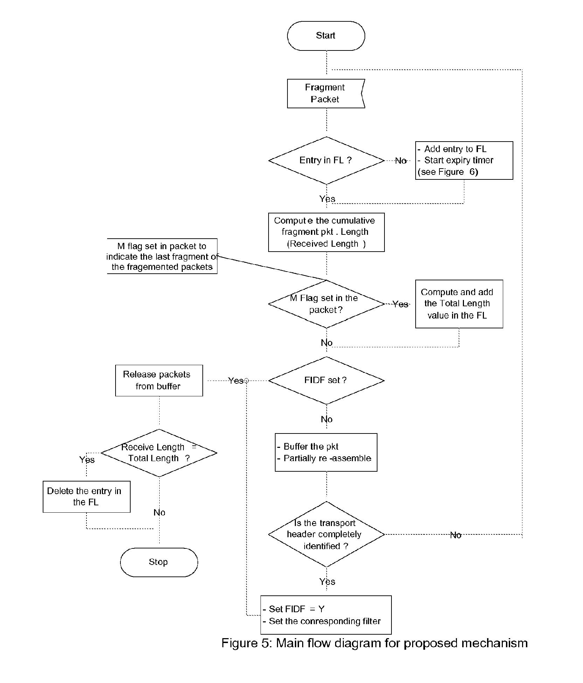

The following describes detailed flow diagrams specifying a method according to the invention referring to enclosed figures 5-6. The proposed mechanism is performed at dedicated network entities in the delivery path like a Home Agent, in case of an application flow management based on Monami6 mechanisms may look as in Fig. 5.

Figure 6 depicts the flow diagram for the expiry timer (refer also to the description of the method above, 1st step) :

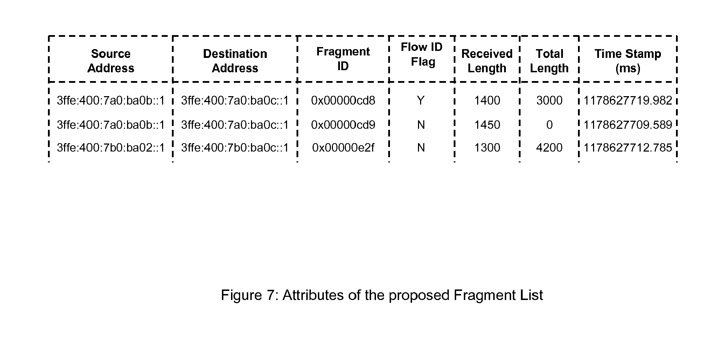

According to the high level description in section 4 the Fragment Packets are queued and buffered until a sufficient number of Fragment Packets are received to be partially reassembled to the complete transport header. The mechanism proposes with this invention a Fragment List (FL) to manage fragment packets that have to be maintained in the mentioned dedicated network entities NEs (HA or MAPs). Figure 7 depicts the proposed FL that contains 7 attributes.

Source Address: IPv6 Source Address of a fragment packet

Destination Address IPv6: Destination Address of a fragment packet

Fragment ID: Identification number in Fragment Header (32 bits)

Flow Identification Flag: The Flow Identification Flag (FIDF) identifies whether flows are identified or not using the proposed mechanism, with Y = identified (i.e., packets sufficiently received to identify the flow) and N = NOT identified (i.e., packets not sufficiently received to identify the flow). (In the example outlined in this invention FIDF = Y finally means that a potential application flow management has set its filters e.g. in the HA according to information in the IP- and the (re-assembled) transport header. HA could do this because the HA received enough fragment packets to identify the flow.)

Received Length: The accumulative fragmentable part length of the original packet that is currently received. It is calculated as follow,

$$Received\ Length = Received\ Length + (Payload\ Length_i - 8),$$

where i is a fragment packet belonging to the particular original packet

Total Length: The total length of the fragmentable part of the original packet. It is only computed when the recipient receives the **last fragment packet** otherwise it is set to 0. It is calculated as follow,

$$Total\ Length = 8 \times LastPkt_{Offset} + (Payload\ Length - 8)$$

Time Stamp: The time in milliseconds that is stamped when the recipient receives the first fragment packet having a particular source address, destination address and Fragment ID other than one in the list.

Considering the **advantages,** simply because of the fact that today no solutions are available or even discussed in related IETF Monami6 WG, it can be stated that with the proposed method for intermediate flow management enabled nodes (network entities) it will be possible for these nodes to cope with Fragment Packets. Hence, it is now possible to manage flows that have to be identified within the mentioned nodes including information from transport header in case of fragmentation. The Fragment Packets, therefore, can be routed to a specified address of the corresponding network attachment. Hence, flow management can be performed correctly at the intermediate flow management enabled nodes.

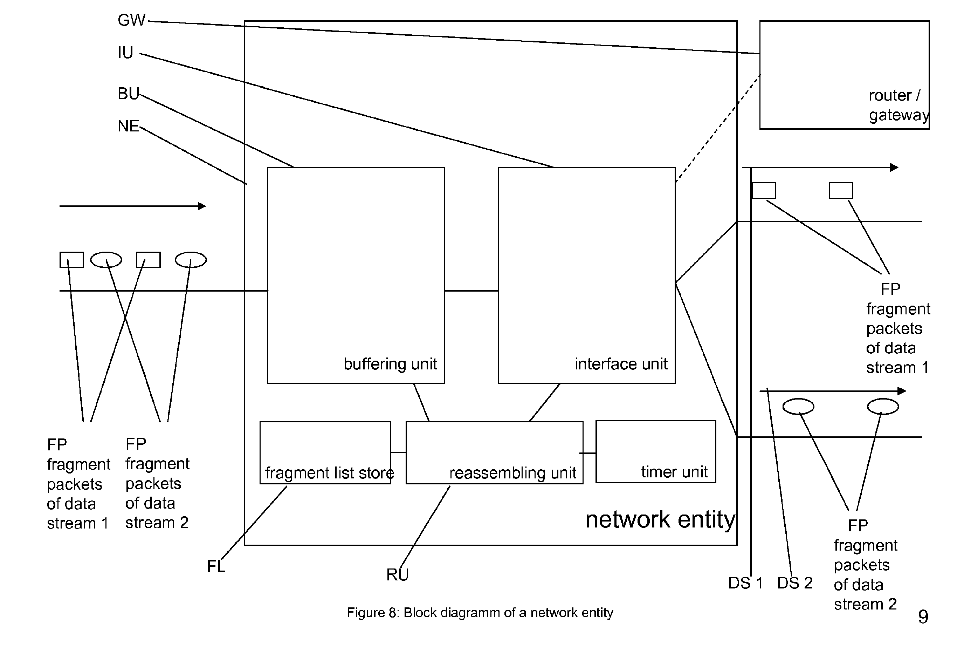

Figure 8 describes as an example elements of a network entity. Incoming fragment packets of two data streams (data stream DS 1, data stream DS 2) are buffered in a buffering unit BU until a reassembling unit RU can reassemble the header of at least one data packet of a data stream, to which fragment packets belong, using a stored fragment list. With an internal or external interface to a fragment packet filtering unit as e.g. a router or gateway the packets of each data stream DS 1 can be forwarded independently from fragment packets of other data streams DS 2.

What has been described above is what is presently considered to be a preferred embodiment of the present invention. However, as is apparent to the skilled reader, this is provided for illustrative purposes only and is in no way intended to that the present invention is restricted thereto. Rather, it is the intention that all variations and modifications be included which fall within the spirit and scope of the appended claims.

List of abbreviations

| | |
|---|---|
| ATM | Asynchronous Transfer Mode |
| BU | Buffering Unit |
| CN | Correspondent Node |
| EPS | Evolved Packet System |
| DS | Data Stream |
| FH | Fragment Header |
| FIDF | Flow ID Flag |
| FL | Fragment List |
| FM | Flow Management |
| FN | Foreign Network |
| FP | Fragment Packet |
| FR | Foreign Router |
| FTP | File Transfer Protocol |
| GW | Gateway |
| HA | Home Agent |
| HN | Home Network |

| | |
|---|---|
| HR | Home Router |
| ID | Identifier |
| IU | Interface Unit |
| MAP | Mobility Anchor point |
| MEXT | Mobility EXTension |
| MIPv6 | Mobile Internet Protocol version 6 |
| MN | Mobile Node |
| MNO | Mobile Network Operator |
| Monami6 | Mobile Nodes and Multiple Interfaces in IPv6 |
| MTU | Maximum Transmission Unit |
| NE | Network Entity |
| PDN | Packet Data Network |
| PPPoE | Point-to-Point over Ethernet |
| RU | Reassembling Unit |
| UE | User Equipment |
| WG | Working Group |

References used:

[1] S. Deering and R. Hinden, "Internet Protocol, Version 6 (IPv6) Specification," RFC 2460, December, 1998
[2] H. Soliman, N. Montavont, N. Fikouras, and K. Kuladinithi, "Flow Bindings in Mobile IPv6 and Nemo Basic Support," draft-soliman-monami6-flow-binding-04.txt, February, 2007
[3] G. Ziemba, D. Reed, and P. Traina, "Security Considerations for IP Fragment Filtering," RFC 1858, October, 1995
[4] B.-H. Chung, J.-D. Lim, S.-H. Ryu, Y.-H. Kim, and K.-Y. Kim, "Fragment packet partial re-assembly method for intrusion detection," Advanced Communication Technology, ICACT 2006)
[5] 3GPP TR 23.882 V1.9.0 (2007-03), 3GPP SAE Report on Technical Options and Conclusions
[6] 3GPP TS 23.402 V1.2.0 (2007-07), Architecture Enhancements for non-3GPP accesses (Release 8)

**Claims**

1. Network entity (ePDN GW / HA, Fig. 4; NE in Fig 8) for handling fragment packets,
   which fragment packets (FP, Figs. 3a, 3b, 8) respectively comprise parts of a data packet of a data stream (DS 1, DS 2 in Figs. 4, 8),
   which data packet comprises data packet header information ("UDP header", Fig. 3a, 3b) and which data packet is longer than a maximum allowed data packet length defined by a protocol used to transmit the fragment packets,
   wherein the network entity comprises:

   - a buffering unit (BU) for temporarily buffering fragment packets (FP#1, FP#2, Fig. 3b) arriving at the network entity,
   - a reassembling unit (RU)

      -- for reassembling data packet header information ("UDP header", Fig. 3a) from one fragment packet (FP#1. Fig. 3a),
      if the complete data packet header information is in this one fragment packet (FP#1),
      -- for reassembling the data packet header information ("UDP header", Fig. 3b) from a plurality of fragment packets (FP#1, FP#2, Fig. 3b),
      if the data packet header information is distributed over a plurality of fragment packets
      (FP#1, FP#2, Fig. 3b).

2. Network entity according to claim 1, wherein it comprises a fragment packet filtering unit or an interface to a fragment packet filtering unit (EPDN / GW or GW (HR) or GW (FR) in Figs 4, 8) for filtering fragment packets depending on reassembled data packet header information.

3. Network entity according to any of the preceding claims, wherein

the fragment packet filtering unit is a fragment packet filtering unit for delivering all fragment packets with equal header information to a specific destination.

4. Network entity according to any of the preceding claims,

- with a fragment list (FL) store for storing fragment information (FIDF) sets,
- with a tracking unit for tracking any arriving fragment packet, that has different fragment information (FIDF) than all other fragment packets for which an fragment information (FIDF) is stored in the fragment list, and for which fragment packet a fragment information (FIDF) set is to be stored after tracking in the fragment list (FL).

5. Network entity according to claim 4,
wherein a fragment information (FIDF) set comprises source address, destination address and ID of a fragment packet, and wherein header information is reassembled only from fragment packets that have the same source address, destination address, and fragment identification.

6. Network entity according to any of the preceding claims, wherein
the buffering unit is a buffering unit for buffering a plurality of fragment packets until either the complete header information can be reassembled from the buffered plurality of fragment packets,
or, if available, until a timer is timed out.

7. Network entity according to any of the preceding claims, wherein
fragment packets are fragmented from a data packet by a source node, especially an IPv6 source node.

8. Network entity according to any of the preceding claims, wherein
the fragment packets are transmitted using an internet protocol, preferably Mobile IPv6.

9. Network entity according to any of the preceding claims, wherein
the network entity comprises a fragment list storing unit for entering a flow identification flag (Flow ID Flag) concerning all fragment packets of a data packet into a fragment list memory.

10. Network entity according to any of the preceding claims, wherein
the network entity comprises a timer setting unit for setting a time stamp when the first fragment packet of a data packet arrives, and wherein the network entity comprises a timer checking unit for checking the timer and for deleting all stored fragment packets of a data packet when noticing that a timer set for the fragment packets expired.

11. Network entity according to any of the preceding claims, wherein
the data packet header information is transport header information in the data packet.

12. Network entity according to any of the preceding claims, wherein
header information in a header of a fragment packet comprises a port number of a data stream, by which port number the fragment packets of this data stream can be separated from fragment packets of a further data stream (Fig. 4).

13. Network entity according to any of the preceding claims, wherein
it comprises a Home Agent (HA) or any other Mobility Anchor Point (MAP) for Mobile IPv6.

14. Method for handling fragment packets arriving at a network entity,
which fragment packets respectively comprise parts (Fig 3a, "IP Header", "Hop-by-Hop Opt Header", "Routing Header", "UDP Header", "Data") of a data packet (DP) of a data stream (DS 1, DS 2),
which data packet comprises data packet header information ("UDP header") and which data packet is longer than a maximum allowed data packet length defined by a protocol used to transmit the fragment packets (FP#1, FP#2, FP#3),
the method comprising:

- at least temporarily buffering fragment packets arriving at the network entity (NE),
- reassembling data packet header information from one fragment packet, if the complete data packet header information is comprised in this one fragment packet (FP#1),
- reassembling the data packet header information from a plurality of fragment packets if the data packet header information is distributed over a plurality of fragment packets (FP#1, FP#2).

**15.** Method according to claim 14, comprising
filtering (GW) fragment packets depending on reassembled data packet header information.

**16.** Method according to claim 15, comprising

- storing fragment information (FIDF) sets in a fragment list (FL),
- tracking any arriving fragment packet that has different fragment information (FIDF) from all other fragment packets and storing fragment information (FIDF) set for this fragment packet in the fragment list (FL) in the fragment list store.

**17.** Method according to claim 16,
wherein a fragment information (FIDF) set comprises source address, destination address and ID of the fragment packets of a data packet,
and wherein header information is reassembled only from fragment packets that have the same source address, destination address, and fragment identification.

**18.** Method according to any of the claims 16-17,
wherein an expiry timer (Figure 6) is started,
if the tracking unit tracks an arriving fragment packet's source address, destination address and ID are different from all other fragment packets for which a fragment information (FIDF) set is stored in the fragment list (FL) in the fragment list store,
wherein if a fragment packet arrives and the timer is expired,
the entry in the fragment list (FL) is deleted, and all fragment packet(s) for the particular source address, destination address and Fragment ID in the buffer are deleted,
and preferably in addition flow management filter(s) for these fragment packets, if available, are removed.

**19.** Method according to any of the preceding claims 16-18, wherein
the fragment packet filtering unit delivers or routes fragment packets with equal header information or transport header information to a specific destination.

**20.** Method according to any of the preceding claims 16-19, wherein
the buffering unit buffers a plurality of fragment packets until the complete header information can be reassembled from the buffered plurality of fragment packets,
or, if available, until a timer is timed out.

**21.** Method according to any of the preceding claims 16-20, wherein
fragment packets are fragmented from a data packet by a source node, especially an IPv6 source node.

**22.** Method according to any of the preceding claims 16-21, wherein
flow identification flags (Flow ID Flag) concerning all fragment packets of a data packet are respectively stored in a fragment list memory.

**23.** Method according to any of the preceding claims 16-22, wherein
the header information is transport header information of the data packet.

**24.** Method according to any of the preceding claims 16-23, wherein
the header information comprises a port number of a data stream, by which port number the fragment packets of this data stream can be separated from fragment packets of a further data stream (DS 1, DS 2 in Fig. 8).

**25.** A computer program product comprising code means adapted to produce the steps of any one of claims 17-24 when loaded into a memory of a computer.

| 0 | 8 | 16 | 24 | 32 |
|---|---|---|---|---|
| Next Header | Reserved | Fragment Offset | | Res | M |
| (Fragment) Identification | | | | |

Figure 1: IPv6 Fragment Header Format

EP 2 110 998 A1

| Next Header 17 | UDP Header | UDP Segment Data |
|---|---|---|
| IP Header | | IP Data |

(a) Unfragmented UDP datagram

| Next Header 44 | Next Header 17 | UDP Header | UDP Segment Data |
|---|---|---|---|
| IP Header | Fragment Header | | IP Data |

(b) UDP datagram with Fragment Header

Figure 2: Example of the use of Fragment Header in Fragment UDP Datagram

Figure 3a: Example of Fragment Packets

Figure 3b: Example of Fragment Packets

CN – Correspondent Node
EPS – Evolved Packet System
FR – Foreign Router
GW – Gateway
HR – Home Router
HA – Home Agent
PDN – Paket Data Network

EP 2 110 998 A1

Note 1:        GW may be the Serving Gateway [6].
Note 2:        GW may be the ePDG [6].
Note 3:        PDN Gateway is an extended one with the proposed mechanism.

Figure 4: 3GPP application

```
                          ┌──────────┐
                          │  Start   │
                          └──────────┘
                               ┊
                      ┌──────────────────┐
                      │    Fragment      │
                      │    Packet        │
                      └──────────────────┘
                               ┊
                                              ┌────────────────────┐
                          ◇───────◇           │ - Add entry to FL  │
                         Entry in FL ?  ──No── │ - Start expiry timer│
                          ◇───────◇           │ (see Figure 6)     │
                               │              └────────────────────┘
                              Yes
                      ┌──────────────────┐
                      │ Compute the      │
                      │ cumulative       │
                      │ fragment pkt.    │
                      │ Length           │
                      │ (Received Length)│
                      └──────────────────┘
   ┌────────────────────┐        ┊
   │ M flag set in packet│       
   │ to indicate the last│      ◇───────◇         ┌──────────────────┐
   │ fragment of the     │─── M Flag set in the ──Yes── │ Compute and add │
   │ fragemented packets │      packet ?          │ the Total Length │
   └────────────────────┘      ◇───────◇         │ value in the FL  │
                                    │              └──────────────────┘
                                   No
   ┌──────────────┐          ◇───────◇
   │Release packets│── Yes ── FIDF set ?
   │ from buffer   │          ◇───────◇
   └──────────────┘               │
           ┊                      No
      ◇──────────◇         ┌──────────────────┐
    Receive Length =       │ - Buffer the pkt │
     Total Length ?        │ - Partially re-  │
      ◇──────────◇         │   assemble       │
   Yes     │               └──────────────────┘
   ┌──────────────┐               ┊
   │Delete the entry│        ◇──────────◇
   │  in the FL    │        Is the transport
   └──────────────┘         header completely ── No
           ┊       No         identified ?
       ┌──────────┐          ◇──────────◇
       │   Stop   │               │
       └──────────┘              Yes
                        ┌────────────────────────┐
                        │ - Set FIDF = Y         │
                        │ - Set the conresponding│
                        │   filter               │
                        └────────────────────────┘
```

Figure 5: Main flow diagram for proposed mechanism

Start

Expiry of the
timer

Entry in FL?

Yes

No

- Delete the entry in the FL
- Flush the buffer

Stop

Figure 6: Expiry timer flow diagram

| Source Address | Destination Address | Fragment ID | Flow ID Flag | Received Length | Total Length | Time Stamp (ms) |
|---|---|---|---|---|---|---|
| 3ffe:400:7a0:ba0b::1 | 3ffe:400:7a0:ba0c::1 | 0x00000cd8 | Y | 1400 | 3000 | 1178627719.982 |
| 3ffe:400:7a0:ba0b::1 | 3ffe:400:7a0:ba0c::1 | 0x00000cd9 | N | 1450 | 0 | 1178627709.589 |
| 3ffe:400:7b0:ba02::1 | 3ffe:400:7b0:ba0c::1 | 0x00000e2f | N | 1300 | 4200 | 1178627712.785 |

Figure 7: Attributes of the proposed Fragment List

Figure 8: Block diagramm of a network entity

EP 2 110 998 A1

**Europäisches Patentamt**
**European Patent Office**
**Office européen des brevets**

## EUROPEAN SEARCH REPORT

**Application Number**

EP 08 10 3569

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/039249 A1 (BASSO CLAUDE [US] ET AL) 27 February 2003 (2003-02-27)<br>* paragraph [0012]; claims 13,15 *<br>* paragraph [0013]; claim 1 *<br>* paragraphs [0041], [0044], [0047]; claims 9,21 *<br>* claims 12,24 *<br>* paragraph [0044]; figure 9 *<br>* claims 8-10; figure 8 *<br>* paragraph [0042] *<br>* paragraph [0002] *<br>----- | 1-25 | INV.<br>H04L12/56 |
| X | US 2005/286517 A1 (BABBAR UPPINDER S [US] ET AL) 29 December 2005 (2005-12-29)<br>* paragraph [0007]; claims 14,18,19 *<br>* paragraph [0011] *<br>* paragraphs [0065], [0070]; figure 6 *<br>* paragraphs [0057], [0061] - [0064] *<br>* claim 2 *<br>* paragraph [0067]; figure 6 *<br>* claims 15,16 *<br>* paragraphs [0071], [0072] *<br>----- | 1-25 | |
| X | EP 1 109 373 A (SUN MICROSYSTEMS INC [US]) 20 June 2001 (2001-06-20)<br>* the whole document *<br>----- | 1-25 | TECHNICAL FIELDS SEARCHED (IPC)<br><br>H04L |

The present search report has been drawn up for all claims

| Place of search | Date of completion of the search | Examiner |
|---|---|---|
| Munich | 26 November 2008 | Lupia, Sergio |

**ANNEX TO THE EUROPEAN SEARCH REPORT
ON EUROPEAN PATENT APPLICATION NO.**

EP 08 10 3569

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2008

| Patent document cited in search report | | Publication date | Patent family member(s) | | Publication date |
|---|---|---|---|---|---|
| US 2003039249 | A1 | 27-02-2003 | NONE | | |
| US 2005286517 | A1 | 29-12-2005 | CA | 2572060 A1 | 12-01-2006 |
| | | | EP | 1766897 A1 | 28-03-2007 |
| | | | JP | 2008505561 T | 21-02-2008 |
| | | | WO | 2006005029 A1 | 12-01-2006 |
| EP 1109373 | A | 20-06-2001 | AT | 313199 T | 15-12-2005 |
| | | | DE | 60024763 T2 | 31-08-2006 |
| | | | US | 6795866 B1 | 21-09-2004 |

EPO FORM P0459

For more details about this annex : see Official Journal of the European Patent Office, No. 12/82